# EUROPEAN PATENT APPLICATION

(11) **EP 4 574 258 A1**
(43) Date of publication of application: **25.06.2025**
(21) Application number: 23864316.7
(22) Date of filing: 06.04.2023
(51) Int. Cl.: B01J 29/16, C10G 45/54

(54) **CARRIER AND PREPARATION METHOD THEREFOR, CATALYST AND PREPARATION METHOD THEREFOR AND USE THEREOF, AND CATALYTIC DIESEL OIL HYDROCONVERSION METHOD USING FLUIDIZED BED**

(30) Priority: 17.09.2022 CN 202211132606
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: ZHU, Huihong, Dalian, Liaoning 116045 (CN); DU, Yanze, Dalian, Liaoning 116045 (CN); JIN, Hao, Dalian, Liaoning 116045 (CN); LV, Zhenhui, Dalian, Liaoning 116045 (CN); YANG, Tao, Dalian, Liaoning 116045 (CN); WANG, Jifeng, Dalian, Liaoning 116045 (CN)
(74) Representative: Hoffmann Eitle
(86) International application number: PCT/CN2023/086574
(87) International publication number: WO 2024/055574

(57) **Abstract**

The present invention relates to the technical field of catalytic materials. Disclosed are a carrier and a preparation method therefor, a catalyst and a preparation method therefor and a use thereof, and a catalytic diesel oil hydroconversion method using a fluidized bed. The carrier is spherical and has a core-shell structure; the carrier uses a molecular sieve as a core layer and aluminum oxide as a shell layer; based on the weight of the carrier, the content of aluminum oxide is 30%-70%, preferably 30%-65%, and the content of the molecular sieve is 30%-70%, preferably 35%-70%; and the diameter of carrier particles is 0.5-3 mm, preferably 0.8-2 mm. A catalyst prepared by using the carrier of the present invention has high activity and stability, so that catalytic diesel oil hydroconversion can be carried out to produce a gasoline high-octane blending component or BTX, thereby supporting the transformation from oil refining to chemical industry.

## Description

### CROSS-REFERENCE TO RELATED APPLICATIONS

The application claims the benefit of the Chinese Patent Application No. "202211132606.1", filed on September 17, 2022, the content of which is specifically and entirely incorporated herein by reference.

### TECHNICAL FIELD

The present invention belongs to the technical field of catalytic materials, and in particular relates to a hydrogenation catalyst carrier and a preparation method therefor, a hydrogenation catalyst and a preparation method therefor and a use thereof, and a catalytic diesel oil hydroconversion method using a fluidized bed.

### BACKGROUND ART

Catalytic Cracking (FCC) technology is one of the primary technical means for the light-weighting of heavy oils and has an important position in oil refineries in various countries around the world. The total annual processing capacity of FCC units in China has exceeded 170 million tons, and the annual production of catalytic diesel is up to 35 million tons, representing about one-third of the total diesel oil output in China. The mass fraction of aromatic hydrocarbons in the catalytic diesel oil ranges from 70% to 90%, but the majority of aromatic hydrocarbon components are composed of bicyclic aromatic hydrocarbons and monocyclic aromatic hydrocarbons, both have very low cetane number and poor stability and are the worst components in diesel oil, it is difficult to hydrogenate and remove impurities, thereby forming a Gordian knot for the technological process.

The catalytic diesel oil hydroconversion technology, which uses hydrocracking processes to convert polycyclic aromatic hydrocarbons in catalytic diesel to light aromatic hydrocarbons, can produce clean gasoline blending components and BTX with high added-value, thus it is the desirable route for addressing current problems regarding the excessive production capacity of diesel oil and shortage of low carbon aromatic hydrocarbons.

The catalytic diesel oil hydroconversion catalyst is a core element of the technology, the existing hydrocracking catalysts and hydrofining catalysts cannot meet the property requirements for catalytic diesel hydrogenation, cracking, and directed conversion of aromatic hydrocarbons at the same time, the hydroconversion is generally achieved by means of grading and matching of catalysts, it has been the goal sought by researchers concerning how to achieve the hydrogenation and subsequent cracking functions and improve the yield of the target products by using a single catalyst.

US6174429B1 discloses a hydrocracking catalyst comprising: at least one acidified aluminum-containing amorphous matrix in an amount from 1wt% to 99wt%; a Y-type molecular sieve in an amount from 0.1wt% to 80wt%, which has a unit cell parameter is 2.438nm, a SiO₂/Al₂O₃ chemical molar ratio about 8, and SiO₂/Al₂O₃ framework molar ratio about 20; at least one metal component from the group VIII in an amount from 0.1 wt% to 30wt%, at least one metal component from the group VIB in an amount from 1wt% to 40wt%, an auxiliary agent in an amount from 0.1 wt% to 20wt%, and at least one element from the group VIIA in an amount from 0 to 20wt%. The catalyst is produced with a preparation method consisting of initially preparing a carrier and then loading a hydrogenation metal on the carrier, the catalyst has desirable activity and stability, but the hydroconversion properties shall be further enhanced, and the yields of heavy naphtha and aviation kerosene are not high.

CN111097485A discloses a catalyst for catalyzing diesel oil hydro-conversion and a preparation method and a use thereof. By taking the total weight of the hydro-conversion catalyst as a reference, the catalyst contains 30-70wt% of a modified Y-type molecular sieve and 0.01-0.1 wt% of carbon; the ratio of the pyridine infrared total acid amount to the n-butyl pyridine infrared total acid amount in the modified Y-type molecular sieve is within the range of 1-1.2; the pyridine infrared total acid amount is 0.1-1.2 mmol/g; and based on the total amount of the modified Y-type molecular sieve, the modified Y-type molecular sieve contains 0.5-2.0 wt% of Na₂O. The preparation method of the hydro-conversion catalyst adopts a mixing-kneading method or an impregnation method to prepare the hydro-conversion catalyst. The catalyst contains the modified Y molecular sieve, and nitrides are easily adsorbed on the surface of the molecular sieve to cause poisoning of the molecular sieve, thus the catalyst activity is significantly reduced.

### SUMMARY OF THE INVENTION

In order to solve the defects in the prior art, the present invention provides a hydrogenation catalyst carrier and a preparation method thereof, a hydrogenation catalyst and a preparation method therefor and a use thereof, and a catalytic diesel oil hydroconversion method using a fluidized bed. The technical scheme provided by the present invention allows a catalyst to perform a gradual reaction of initially implementing the hydrogenation and subsequently the cracking process, the catalyst provided by the present invention has efficiently matched hydrogenation activity and cracking activity, especially suitable for use in the catalytic diesel oil hydroconversion process.

For achieving the above objects, the first aspect of the present invention provides a hydrogenation catalyst carrier that is spherical and has a core-shell structure, wherein the carrier uses a molecular sieve as a core layer and aluminum oxide as a shell layer; based on the weight of the carrier, the content of aluminum oxide is 30%-70%, preferably 30%-65%, and the content of the molecular sieve is 30%-70%, preferably 35%-70%; and the diameter of carrier particles is within the range of 0.5-3mm, preferably within the range of 0.8-2mm.

The second aspect of the present invention provides a preparation method for a hydrogenation catalyst carrier, the method comprising the following steps:
(1) mixing an aluminum source, a curing agent, a dispersant, and a molecular sieve to obtain a material flow B;
(2) blending the material flow B with an oil phase to obtain a material flow C;
(3) mixing the material flow C obtained in step (2) with an emulsifier and an auxiliary agent to obtain a material flow D, and subjecting the material flow D to moulding, aging, washing, drying and roasting.

The third aspect of the present invention provides a hydrogenation catalyst comprising a carrier and active metal components, wherein the carrier uses a molecular sieve as a core layer and aluminum oxide as a shell layer; based on the weight of the carrier, the content of aluminum oxide is 30%-70%, preferably 30%-65%, and the content of the molecular sieve is 30%-70%, preferably 35%-70%; and the diameter of carrier particles is within the range of 0.5-3mm, preferably within the range of 0.8-2mm.

The fourth aspect of the present invention provides a preparation method for the hydrogenation catalyst, the method comprising the following steps:
S1: preparing a carrier using the preparation method according to the second aspect;
S2: introducing active metal components to the carrier to obtain a hydrogenation catalyst;
the active metal components comprise at least one of the group VIII metals and at least one of the group VIB metals.

The fifth aspect of the present invention provides a use of the hydrogenation catalyst according to the third aspect or the hydrogenation catalyst produced with the preparation method according to the fourth aspect in the hydroconversion process of a hydrocarbonaceous material.

The sixth aspect of the present invention provides a catalytic diesel oil hydroconversion method using a fluidized bed, the method comprising: carrying out the reaction of a catalytic diesel with hydrogen gas in a fluidized bed hydrogenation reactor in the presence of a catalyst under the catalytic diesel oil hydroconversion conditions, wherein the catalyst is the hydrogenation catalyst according to the third aspect, or the hydrogenation catalyst produced with the preparation method according to the fourth aspect.

As compared with the prior art, the advantages of the hydrogenation catalyst carrier, the catalyst, the preparation method, and the use provided by the present invention are mainly reflected in the following aspects:

1. The present invention provides a hydrogenation catalyst carrier with a spherical core-shell structure, the carrier has a macro-structure of core-shell structure, uses a molecular sieve as a core layer and aluminum oxide as a shell layer; the catalyst prepared with the carrier allows a gradual reaction of initially implementing the hydrogenation and subsequently the cracking process of the catalytic diesel; the catalyst has high activity and stability so that catalytic diesel oil hydro-conversion can be carried out to produce a gasoline high-octane blending component or BTX, thereby supporting the transformation from oil refining to chemical industry.

2. In the preparation method provided by the present invention, the problem of the high surface energy of the tiny molecular sieves is overcome by introducing a dispersant, preferably in combination with an effect of the ultrasound, such that the molecular sieve surfaces are more wettable and uniformly dispersed, and the stability of the dispersion system is ensured for laying the foundation for subsequent preparation of the carrier having a core-shell structure.

3. In the preparation method of the present invention, extraction is preferably carried out after an aging process, so that the organic substances in the material are recovered for preventing environmental pollution, and avoiding the problem of reduced strength caused by the decomposition of organic substances during the roasting process.

4. In the preparation method of the present invention, the aluminum source (preferably aluminum sol) and the molecular sieve are prepared into the water-in-oil (W/O) emulsion, which can be drop-wise added in water to form a spherical shape, and overcome the pollution problem during the formation process of oil column and oil ammonia column, thus the overall preparation process is pollution-free and environmentally friendly.

### BRIEF DESCRIPTION OF THE DRAWINGS

FIG. 1 is a Scanning Electron Microscope (SEM) line scanning schematic diagram of a sample of carrier A1 prepared in Example 1 of the present invention;
FIG. 2 is distribution diagram of the samples of carriers prepared in Example 1, Comparative Example 1, and Comparative Example 2 along the radial direction of SiO₂ of the carrier;
FIG. 3 is an SEM dotting schematic diagram of the catalyst prepared in the Examples.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

In the first aspect, the present invention provides a hydrogenation catalyst carrier that is spherical and has a core-shell structure, wherein the carrier uses a molecular sieve as a core layer and aluminum oxide as a shell layer; based on the weight of the carrier, the content of aluminum oxide is 30%-70%, preferably 30%-65%, and the content of the molecular sieve is 30%-70%, preferably 35%-70%; and the diameter of carrier particles is within the range of 0.5-3mm.

The diameter of carrier particles is preferably within the range of 0.8-2mm, for example, it may be 0.8mm, 1mm, 1.2mm, 1.4mm, 1.6mm, 1.8mm, 2mm, or any value within the range consisting of two numerical values thereof.

Preferably, the thickness of the carrier shell layer is 30-60%, more preferably 30-55% of the carrier diameter, for example, it may be 30%, 35%, 40%, 45%, 50%, 55%, or any value within the range consisting of two numerical values thereof.

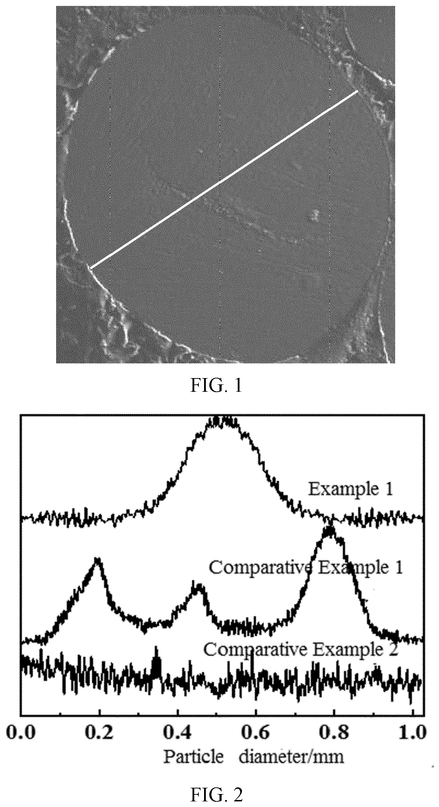

In the present invention, the carrier is spherical and has a macroscopic core-shell structure, it uses a molecular sieve as a core layer and aluminum oxide as a shell layer. The core-shell structure in the carrier of the present invention and the percentage of the thickness of the carrier shell layer relative to the carrier diameter can be obtained by the SEM characterization, the line scanning with SEM is performed to determine the distribution of materials on particles by measuring the strength of signals caused by the measurement of the specific substances. Specifically, in the present invention, as shown in FIG. 2, the distributions of molecular sieve and aluminum oxide are determined based on the signal strength of the carrier samples in the present invention along the radial direction of SiO₂ in the carrier, wherein the SiO₂ is in normal distribution and the signals appear at the middle of the diameter of carrier particles, indicating that the carrier has a core-shell structure. The present invention defines the length corresponding to the peak width of the SiO₂ signal peak of the carrier as the diameter of the core in the carrier, and the difference value between the carrier diameter and the core diameter is denoted as the shell layer thickness.

Unless otherwise specified in the present invention, the SEM characterization is carried out by using a scanning electron microscope with the model JSM-7500 manufactured by the Japanese Electronics Company under the testing conditions of an accelerated voltage of 5KV, an accelerated current of 20 µA, and a working distance of 8mm.

In the present invention, the content of the molecular sieve and aluminum oxide in the carrier are calculated based on the feeding quantity according to the catalyst requirements.

In the present invention, the spherical shape refers to the spherical shape in a broad sense, and a quasi-spherical shape also falls into the protection scope of the present invention.

In the present invention, the diameter of carrier particles is tested using the method stipulated in the Q/SH 361933-2020.

According to a preferred embodiment of the present invention, the carrier has a total acid number within the range of 0.4-0.7 mmol/g, preferably within the range of 0.45-0.7 mmol/g.

According to a preferred embodiment of the present invention, the ratio of B acid to L acid of the carrier is within the range of 0.9-1.4, preferably within the range of 0.9-1.3.

Unless otherwise specified in the present invention, both the total acid number and the ratio of B acid to L acid are measured by using the pyridine adsorption infrared spectroscopy, particularly by a Fourier Transform Infrared spectrometer with a model NICOLET 6700.

According to the present invention, the carrier preferably has a specific surface area within the range of 350-550 m²/g, more preferably within the range of 380-500 m²/g.

According to the present invention, the carrier preferably has a pore volume within the range of 0.4-0.7 mL/g, more preferably within the range of 0.4-0.65 mL/g.

According to the present invention, the carrier preferably has a multi-stage pore distribution; it is preferable in the carrier that the pore volume of the pores having a diameter less than 4nm pores accounts for 5% or less of the total pore volume, the pore volume of the pores having a diameter within the range of 4-10nm accounts for 65-85% of the total pore volume, and the pore volume of the pores having a diameter larger than 10nm accounts for 10-30% of the total pore volume. The percentage of the pore volume of the pores having a diameter less than 4nm in the total pore volume may be, for example, 1%, 2%, 3%, 4%, 5%, or any value within the range consisting of two numerical values thereof. The percentage of the pore volume of the pores having a diameter within the range of 4-10nm in the total pore volume may be, for example, 65%, 70%, 75%, 80%, 85%, or any value within the range consisting of two numerical values thereof. The percentage of the pore volume of the pores having a diameter larger than 10nm in the total pore volume may be, for example, 10%, 15%, 20%, 25%, 30%, or any value within the range consisting of two numerical values thereof.

Unless otherwise specified in the present invention, the specific surface area, the pore volume, and the pore size distribution are measured using the cryogenic liquid nitrogen physisorption method, the instrument in use is ASAP2405, 2420 physical adsorption instrument manufactured by the Corporation in the United States of America.

According to the present invention, preferably, the bulk ratio of the carrier is within the range of 0.5-0.9 g/mL. Unless otherwise specified in the present invention, the bulk ratio is tested by using the graduated cylinder method stipulated in the Q/SH 361 928.

According to the present invention, the wear index of the carrier is preferably less than or equal to 0.05%, more preferably less than or equal to 0.03%. Unless otherwise specified in the present invention, the wear index is measured according to the air jet method (ASTM-5757-00).

According to the present invention, the edgewise compressive strength of the carrier is preferably larger than 18N/mm, more preferably larger than 20N/mm, and further preferably within the range of 25-50N/mm. Unless otherwise specified in the present invention, the edgewise compressive strength is measured according to the method stipulated in the Q/SH 361 932-2020.

The carrier provided by the present invention has a small wear index and a high edgewise compressive strength so that the catalyst produced with the carrier is suitable for use in a variety of reactors.

The molecular sieve of the present invention can be selected from a wide range and there may be various types of molecular sieves conventionally used in the art. Preferably, the molecular sieve is at least one selected from the group consisting of a Y-type molecular sieve, β molecular sieve, ZSM-5 molecular sieve, SAPO molecular sieve, and MCM-41 molecular sieve. More preferably, the molecular sieve is a Y-type molecular sieve. The molecular sieve of the present invention can be modified according to the requirements of a particular usage scenario. According to one preferred embodiment of the present invention, the molecular sieve of the present invention includes modified or unmodified molecular sieves of the above-mentioned types. The present invention does not impose specific limitations to the particular modification mode, which can be suitably selected by those skilled in the art according to the particular situation.

According to a preferred embodiment of the present invention, the Y-type molecular sieve has the pore volume within the range of 0.35 mL/g - 0.5 mL/g, the specific surface area within the range of 700m²/g - 950m²/g, the infrared total acid amount within the range of 0.6-1 mmol/g, the relative crystallinity within the range of 90%-120%, the SiO₂/Al₂O₃ molar ratio within the range of 10-30, and the unit cell parameter within the range of 2.436-2.450 nm. The use of such a preferred embodiment is conducive to the cracking of catalytic diesel after hydrogenation.

According to the second aspect, the present invention provides a preparation method for a hydrogenation catalyst carrier, the method comprising the following steps:
(1) mixing an aluminum source, a curing agent, a dispersant, and a molecular sieve to obtain a material flow B;
(2) blending the material flow B with an oil phase to obtain a material flow C;
(3) mixing the material flow C obtained in step (2) with an emulsifier and an auxiliary agent to obtain a material flow D, and subjecting the material flow D to moulding, aging, washing, drying and roasting.

The particular mode of mixing in step (1) is not particularly limited in the present invention, as long as a homogeneous material flow B can be formed. Preferably, step (1) comprises:
(1-1) mixing an aluminum source, a curing agent, and a dispersant to obtain a material flow A;
(1-2) adding molecular sieve to the material flow A for dispersion to obtain the material flow B.

The specific conditions of the mixing in step (1-1) are not specifically limited in the present invention, as long as a homogeneous material flow A can be formed.

Preferably, the dispersion in the step (1-2) is carried out under ultrasonic conditions, the ultrasonic frequency is preferably within the range from 25KHz to 130 KHz.

Under the aforementioned preferred embodiments of the present invention, the problem of the high surface energy of the tiny molecular sieves is overcome by introducing a dispersant, preferably in combination with an effect of the ultrasound, such that the molecular sieve surfaces are more wettable and uniformly dispersed, and the stability of the dispersion system is ensured for laying the foundation for subsequent preparation of the catalyst having a core-shell structure.

Preferably, the material flow B has a solid content from 35wt% to 55wt%, more preferably from 35wt% to 50 wt%.

According to the method provided by the present invention, preferably, the aluminum source is selected from aluminum sol and/or acidified pseudo-boehmite, more preferably aluminum sol.

The aluminum sol of the present invention may be selected from a wide range, the mass content of Al₂O₃ in the aluminum sol is preferably within the range of 20-45%, more preferably within the range of 25-40%. The aluminum sol is commercially available.

Preferably, the curing agent is selected from organic amines, more preferably hexamethylenetetramine and/or urea, further preferably hexamethylenetetramine. The curing agent of the present invention is commercially available.

Preferably, the mass concentration of the curing agent is within the range of 30-70%.

According to a preferred embodiment of the present invention, the addition amount of the curing agent is 1-15%, preferably 2.5-12% of the mass of said aluminum source calculated in terms of aluminum oxide. In the present invention, the addition amount of the curing agent means the addition amount of the substance that really plays the role in the curing agent, it is calculated based on pure substance, excluding the solvent of the curing agent.

The present invention has a wide variety of choices for the dispersant, as long as the dispersant allows for easier wetting and dispersion of the molecular sieve surface. Preferably, the dispersant is at least one selected from the group consisting of sodium lauryl sulfate, methyl amyl alcohol, trioctyl phosphate, cellulose derivatives, guar gum, and fatty acid polyglycol ester. The dispersant is commercially available.

Preferably, the cellulose derivative is at least one selected from the group consisting of cellulose ether, cellulose ester, and cellulose ether ester; more preferably, the cellulose derivative is at least one selected from the group consisting of methylcellulose, ethylcellulose, carboxymethylcellulose, carboxyethylcellulose, hydroxymethylcellulose, hydroxyethylcellulose, cellulose nitrate, cellulose acetate, cellulose acetate butyrate, and cellulose xanthate.

Preferably, the mass concentration of the dispersant is within the range of 20-40%.

According to a preferred embodiment of the present invention, the addition amount of the dispersant is 5-15% of the mass of the aluminum source calculated in terms of aluminum oxide. In the present invention, the addition amount of the dispersant means the addition amount of the substance that really plays the role in the dispersant, it is calculated based on pure substance, excluding the solvent of the dispersant.

In the method provided by the present invention, the category selection range of the molecular sieve may be the same as the category selection range of the molecular sieve in the carrier according to the first aspect, the content will not be repeatedly described herein.

Preferably, the particle diameter of the molecular sieve is within the range of 1-10mm, more preferably within the range of 1.5-8mm. In particular, the molecular sieve can be processed by placing it in grinding equipment having a crushing function (e.g., a ball mill) to obtain a molecular sieve sample having a desired particle diameter.

Preferably, the addition amount of the molecular sieve is 0.6-2 times the mass of the aluminum source calculated in terms of aluminum oxide.

In the present invention, the mixing process of step (2) and the type and amount of oil phase are selected from the wide ranges, as long as the material flow C can form a water-in-oil type primary emulsion.

According to a preferred embodiment of the present invention, the oil phase in step (2) has a kinematic viscosity at 40°C within the range of 20-40 mm²/s, preferably within the range of 25-35 mm²/s. The use of such a preferred embodiment is advantageous for the formation of water-in-oil micro-emulsion.

Preferably, the oil phase is at least one selected from the group consisting of white oil, diesel oil, kerosene, lubricating oil, and C10-C15 alkane compounds, more preferably white oil and/or diesel oil.

Preferably, the addition amount of the oil phase is 1-2.5 times, more preferably 1.2-2.5 times the mass of the material flow B.

The present invention has a wide selection range for the stirring rate of the blending in step (2), the stirring rate is preferably within the range of 8,000-15,000 rpm.

According to the method provided by the present invention, preferably, the emulsifier of step (3) is a non-ionic emulsifier; further preferably, the emulsifier has a hydrophilic-lipophilic balance value within the range of 3-10, more preferably within the range of 4-9. The use of such a preferred embodiment further facilitates emulsification to form a micro-emulsion.

Preferably, the emulsifier is at least one selected from the group consisting of octyl phenol polyoxyethylene ether, span 20 and span 40. The emulsifier is commercially available.

Preferably, the addition amount of the emulsifier is 3wt% - 8wt%, more preferably 4wt% - 7wt% of the mass of the aluminum source calculated in terms of aluminum oxide.

According to the method provided by the present invention, the auxiliary agent is used to agglomerate and aggregate the molecular sieve, it can be selected from a wide range of species, for example, the auxiliary agent is a nucleating agent and/or a coagulant.

Preferably, the auxiliary agent is at least one selected from the group consisting of starch, protein, animal glue, sodium alginate, sodium carboxymethylcellulose, polyacrylamide, sodium polyacrylate, polyvinyl pyridinium, and polyethyleneimine, further preferably polyacrylamide. The auxiliary agent is commercially available.

The molecular weight of the auxiliary agent is not particularly limited in the present invention, those skilled in the art may appropriately select according to the specific kind of auxiliary agent.

According to the present invention, the addition amount of the auxiliary agent is preferably 2wt% - 10wt%, more preferably 3wt% - 10wt% of the addition amount of the molecular sieve.

The present invention has a wide selection range for the stirring rate of the mixing in step (3), the stirring rate is preferably within the range of 300-1,000 rpm.

According to the present invention, the mixing sequence of the substances in step (3) is not particularly limited, it is preferable to initially add an emulsifier and subsequently add an auxiliary agent.

According to the method provided by the present invention, the material flow D preferably has a solid content within the range of 10wt% - 20 wt%, more preferably, material flow D in step (3) is a water-in-oil (W/O) emulsion.

According to the present invention, the moulding process in step (3) preferably comprises: dropwise adding the material flow D into water for moulding, the dropwise addition rate is preferably 60-100 droplets/min.

According to a preferred embodiment of the present invention, the moulding temperature of the moulding process is within the range of 85°C - 98°C, more preferably 93°C - 97°C.

According to the method provided by the present invention, the aging process after the moulding is more conducive to forming a spherical carrier with suitable pore volume and concentrated porous channels.

The present invention has a wide range of choices for aging conditions. Preferably, the aging conditions comprise the aging temperature within the range of 30-100°C, more preferably 80-100°C, and the aging time within the range of 1-48h, more preferably 2-10h.

According to a preferred embodiment of the present invention, the method further comprises performing an extraction prior to the washing operation. In the preferred embodiment, the extraction and washing are carried out after an aging process, so that the organic substances in the material are recovered for preventing environmental pollution, and avoiding the problem of reduced strength caused by the decomposition of organic substances during the roasting process.

The present invention has wide ranges of selection for the extraction solvent and the specific conditions, provided that the organic substances in the material can be recovered, the solvent used for extraction is preferably at least one selected from the group consisting of petroleum ether, cyclohexane, toluene and absolute ethanol, more preferably a mixed solvent of at least one selected from petroleum ether, cyclohexane and toluene with absolute ethanol, further preferably, the volume content of absolute ethanol in the mixed solvent is within the range of 25-50%.

According to the present invention, the extraction conditions preferably comprise the extraction temperature within the range of 90°C-110°C and the extraction time within the range of 2-4h.

The apparatus for carrying out the extraction is not particularly limited in the present invention, it may be, for example, a Soxhlet fat extractor.

The present invention has a wide range of selections for washing conditions. Preferably, the washing in step (3) is done with deionized water wash till the filtrate is neutral. Preferably, the washing temperature is within the range of 65°C to 75°C.

The present invention has no particular limitation on the drying and roasting conditions of step (3), and those skilled in the art may select the conditions based on conventional technical means. Preferably, the drying temperature in step (3) is within the range of 100°C-150°C, and the drying time is within the range of 6-10h. Preferably, the roasting temperature in step (3) is within the range of 450°C-750°C, and the roasting time is within the range of 1-4h.

Furthermore, in the preparation method of a carrier described above, the carrier obtained in step (3) is a spherical carrier.

The third aspect of the present invention provides a hydrogenation catalyst comprising a carrier and active metal components, wherein the carrier uses a molecular sieve as a core layer and aluminum oxide as a shell layer; based on the weight of the carrier, the content of aluminum oxide is 30%-70%, preferably 30%-65%, and the content of the molecular sieve is 30%-70%, preferably 35%-70%; and the diameter of carrier particles is within the range of 0.5-3mm, preferably within the range of 0.8-2mm.

The present invention provides a wide range of choices for the active metal components, which may be the various active metal components conventionally used in the field of hydrogenation, and can be suitably selected by those skilled in the art according to the particular application conditions. Preferably, the active metal components comprise at least one of the group VIII metals and at least one of the group VIB metals. More preferably, the group VIII metal is Ni and/or Co, and the group VIB metal is W and/or Mo.

The category selection range of the molecular sieve may be the same as the category selection range of the molecular sieve in the carrier according to the first aspect, the content will not be repeatedly described herein.

According to a preferred embodiment of the present invention, the carrier content is 61wt%-90wt%, preferably 69wt%-90wt%; the content of the VIII group metal calculated in terms of oxide is 1wt%-9wt%, preferably 1wt%-6wt%; the content of the VIB group metal calculated in terms of oxide is 9wt%-30wt%, preferably 9wt%-25wt%, based on the weight of the catalyst.

According to a preferred embodiment of the present invention, the catalyst also contains a phosphorus element in an amount of 0.5-1.8 wt%, preferably 0.6-1.6 wt%, based on the weight of the catalyst.

According to the present invention, the distribution coefficient φ of the active metal component in the core layer and the shell layer of the carrier is preferably 0.6-0.95: 1, for example, 0.6, 0.7, 0.8, 0.9, 0.95, or any value within the range consisting of two numerical values thereof.

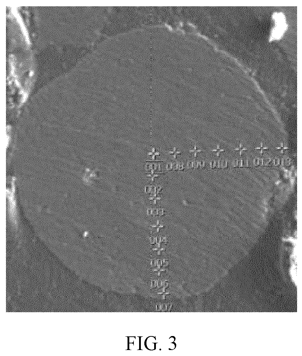

The distribution coefficient φ of the active metal component is used to indicate the distribution law of the active metal component in the carrier core layer and the shell layer, and φ denotes the ratio of the content of the active metal component in the carrier core layer to the content of the active metal component in the shell layer. The analysis can be performed by using the SEM-EDS, and the structure and content analysis can be performed on samples by using the Scanning Electron Microscopy - Energy Dispersive Spectrometer with a model JSM-7500F under the testing conditions of an accelerated voltage of 5KV, an accelerated current of 20 µA, and a working distance of 8mm. Specifically, as shown in FIG. 3, the points are dotted equidistantly toward the edges of the catalyst particle starting from the center of the catalyst particle, and a total of 7 points are dotted, the center is denoted as the point 001, then the point 002, point 003, point 004, point 005, point 006, point 007 are sequentially numbered from the inside to the outside. The present invention defines the distribution coefficient φ as the ratio of the total content of the active metal component at point 001 to that at point 005.

Preferably, the thickness of the carrier shell layer is 30-60%, more preferably 30-55% of the carrier diameter. The test method of the ratio of the carrier shell layer thickness to the carrier diameter is as described above, the content will not be repeatedly described herein.

According to a preferred embodiment of the present invention, the catalyst has a total acid number within the range of 0.35-0.65 mmol/g, preferably within the range of 0.4-0.65 mmol/g.

Preferably, the catalyst has the ratio of B acid to L acid within the range of 0.6-1.1, more preferably within the range of 0.65-1.

Preferably, the catalyst has a specific surface area within the range of 250-450 m²/g, more preferably within the range of 300-450 m²/g.

Preferably, the catalyst has a pore volume within the range of 0.3-0.5 mL/g, more preferably within the range of 0.35-0.5 mL/g.

Preferably, the carrier has a wear index less than or equal to 0.05%, more preferably less than or equal to 0.03%.

Preferably, the carrier has an edgewise compressive strength larger than 20N/mm.

Unless otherwise specified in the present invention, the testing method for the aforementioned physical property parameters of the catalyst is identical with the testing method for the physical property parameters of the carrier described in the first aspect, the content will not be repeatedly described herein.

According to a preferred embodiment of the present invention, the carrier in the catalyst comprises a hydrogenation catalyst carrier according to the first aspect, or a hydrogenation catalyst carrier produced with the preparation method according to the second aspect.

According to the fourth aspect, the present invention provides a preparation method for the hydrogenation catalyst, the method comprising the following steps:
S1: preparing a carrier using the preparation method according to the second aspect;
S2: introducing active metal components to the carrier to obtain a hydrogenation catalyst;
The active metal components comprise at least one of the group VIII metals and at least one of the group VIB metals.

According to the preparation method of the hydrogenation catalyst provided in the present invention, the selection range of the specific kind of active metal component may be identical with the active metal component in the catalyst according to the third aspect mentioned above, the content will not be repeatedly described herein.

According to a preferred embodiment of the present invention, the carrier and active metal components are used in an amount such that the content of the carrier in the prepared catalyst is 61wt%-90wt%, more preferably 69wt%-90wt%; the content of the VIII group metal calculated in terms of oxide is 1wt%-9wt%, more preferably 1wt%-6wt%; the content of the VIB group metal calculated in terms of oxide is 9wt%-30wt%, more preferably 9wt%-25wt%, based on the weight of the catalyst.

The present invention does not impose particular limitations to the specific manner of introducing the active metal component onto the carrier in step S2, it may be a variety of manners conventionally used in the art and can be selected by those skilled in the art according to the practical requirements, such as impregnation process. The present invention is not particularly limited to the particular manner in which the impregnation process is performed and may be a variety of manners that are conventionally used in the art, for example, introducing the active metal component by means of the co-impregnation or stepwise impregnation process. The impregnation may be a saturated impregnation or a supersaturated impregnation.

Preferably, step S2 comprises impregnating the carrier with an impregnation liquid of a precursor containing an active metal component, then drying and roasting for the obtained solid product.

The present invention is not particularly limited to the selection of precursors of the active metal component, which may be metal salts of the active metal component. The impregnation conditions are not particularly restricted, those skilled in the art can make appropriate selections according to the particular circumstances.

According to a preferred embodiment of the present invention, the immersion liquid contains a phosphorus-containing compound. The kind of phosphorus-containing compound is not particularly limited by the present invention, which is exemplified by phosphoric acid to illustrate, but the present invention is not limited thereto.

According to the preparation method of the hydrogenation catalyst provided in the present invention, the drying conditions preferably comprise the drying temperature within the range of 100°C-150°C and the drying time within the range of 2-24h.

According to the preparation method of the hydrogenation catalyst provided in the present invention, the roasting conditions preferably comprise the roasting temperature within the range of 400°C - 600°C and the roasting time within the range of 2-8h.

According to the fifth aspect, the present invention provides a use of the hydrogenation catalyst according to the third aspect or the hydrogenation catalyst produced with the preparation method according to the fourth aspect in the hydroconversion process of a hydrocarbonaceous material.

The present invention has a wide range of selection for the hydrocarbonaceous material, which may be various hydrocarbonaceous materials that require hydrogenation and cracking reactions in a petrochemical field. Preferably, the hydrocarbonaceous material is catalytic diesel. The use of the catalyst provided in the present invention in a catalytic diesel hydroconversion process allows a gradual reaction of initially implementing the hydrogenation and subsequently the cracking process of the catalytic diesel, and the catalyst has high activity and stability so that catalytic diesel oil hydroconversion can be carried out to produce a gasoline high-octane blending component or BTX, thereby supporting the transformation from oil refining to chemical industry.

According to the present invention, preferably, in said application, the hydroconversion process of a hydrocarbonaceous material (preferably a catalytic diesel) may be performed by using one or more of a fixed bed hydrogenation reactor, an ebullated bed hydrogenation reactor, a fluidized bed hydrogenation reactor, and a suspended bed hydrogenation reactor, preferably an ebullated bed hydrogenation reactor and/or a fixed bed hydrogenation reactor.

The sixth aspect of the present invention provides a catalytic diesel oil hydroconversion method using a fluidized bed, the method comprising: carrying out the reaction of a catalytic diesel with hydrogen gas in a fluidized bed hydrogenation reactor in the presence of a catalyst under the catalytic diesel oil hydroconversion conditions, wherein the catalyst is the hydrogenation catalyst according to the third aspect, or the hydrogenation catalyst produced with the preparation method according to the fourth aspect. The inventors of the present invention have found in the course of their research that the hydrogenation catalyst provided by the present invention is particularly suitable for use in fluidized bed catalytic diesel oil hydroconversion processes.

The method provided by the present invention does not impose particular limitations on the properties of catalytic diesel, and various catalytic diesel fuels conventionally used in the art are applicable for the method provided by the present invention, preferably, the properties of the catalytic diesel comprise a density within the range of 0.88-0.99 g/cm³, the content of aromatic hydrocarbons within the range of 50wt%-90wt%, the sulfur content within the range of 0.2wt%-2wt%, and the nitrogen content within the range of 500-2,000 µg/g.

According to a preferred embodiment of the present invention, the catalytic diesel oil hydroconversion conditions comprise: the reaction pressure within the range of 5-10MPa, the reaction temperature within the range of 360-430°C, the liquid hourly space velocity (LHSV) within the range of 0.3-3h⁻¹, and the hydrogen gas/oil volume ratio within the range of 100-1,000; further preferably, the catalytic diesel oil hydroconversion conditions comprise: the reaction pressure within the range of 6-10MPa, the reaction temperature within the range of 380-430°C, the liquid hourly space velocity within the range of 0.3-2.0h⁻¹, and the hydrogen gas/oil volume ratio within the range of 300-800.

The fluidized bed catalytic diesel oil hydroconversion process is not particularly limited in the present invention, the process can be carried out according to conventional technical means in the art. According to a specific embodiment of the present invention, the feedstock oil (catalytic diesel oil) and hydrogen gas enter the bottom of the fluidized bed reactor through a feeding duct; by means of an internal circulation conduit which is vertically mounted in the fluidized bed reactor and the action of a circulation pump, the liquid from the top of the fluidized bed reactor (diesel hydrocracked product) circulates to the bottom, the liquid is sufficiently mixed with the catalytic diesel oil and hydrogen gas, the mixture flows upward through the catalyst bed, such that the catalyst is in a fluidized state. The expansion height of the catalyst bed in a fluidized bed reactor can be controlled by the flow rate of circulation liquid, and the expansion volume of the bed can be increased to 130-150% of the volume of the bed in a static mode. During operation, the reactants and the catalyst particles are desirably in a mixed state, leaving the reaction bed near isothermal. This allows periodic removal of spent catalysts and replenishment of fresh catalysts without shutdown, such that the product properties do not vary over time.

The solutions and effects of the present invention are further illustrated below with reference to the examples.

Unless otherwise specified in the present invention, the testing methods of the carrier and the catalyst property parameters provided in the following examples and comparative examples are as described in the DESCRIPTION OF THE PREFERRED EMBODIMENT.

### Example 1

### (1) Preparation of the spherical carrier

The Y-type molecular sieve with a pore volume of 0.43 mL/g, a specific surface area of 814 m²/g, a relative crystallinity of 98%, a SiO₂/Al₂O₃ molar ratio of 12, a unit cell parameter of 2.446nm and the infrared total acid amount of 0.8 mmol/g was ground by a ball mill to a powder having a particle diameter less than or equal to 1.5 µm;

185g of aluminum sol with 27% by mass of Al₂O₃ was added with 9.5g of hexamethylenetetramine solution with a mass concentration of 40wt% and 20g of sodium dodecyl sulfate solution with a mass concentration of 25wt%, the materials were stirred to obtain a uniform mixed solution.

50g of ground Y-type molecular sieve powder was weighted and added into the mixed solution, and a dispersion system solution containing molecular sieve and having a solid content of 37.78wt% was formed under the action of ultrasonic waves with a frequency of 100KHz;

The dispersion system solution containing a molecular sieve was added into 476.1g of white oil with a kinematic viscosity at 40°C of 28 mm²/s, and stirred at the rotational speed of 800 r/min to obtain a water-in-oil primary emulsion;

The primary emulsion was added with 55.8g of octyl phenol polyoxyethylene ether (OP-4, purchased from Jiangsu Pules Biotechnology Co., Ltd.) having a concentration of 4.5wt% and a hydrophilic-lipophilic balance value (HLB) of 8.0, and 2.0g of polyacrylamide (with a weight average molecular weight of 3,000,000, manufactured by the Sinopharm Group), and the stirring rotational speed was adjusted to 3,500 rpm, a water-in-oil (W/O) emulsion having a solid content of 12.5 wt% was obtained.

The obtained emulsion was dropwise added (80 droplets/min) into the water for moulding at the temperature of 95°C by using a syringe, the molded gel beads were subjected to aging at the temperature of 95°C for 1.5h, and after the aging process was complete, the gel beads were extracted in a Soxhlet fat extractor at the temperature of 100°C for 2.5h by using a mixed solution consisting of petroleum ether and absolute ethanol in a volume ratio of 1: 1, then washed with deionized water at the temperature of 70°C to be neutral, then dried at the temperature of 120°C for 8 hours, then roasted at the temperature of 500°C for 3 hours to obtain the spherical carrier A1 having a particle diameter of 1.03mm, its properties were shown in Table 1.

### (2) Preparation of the spherical catalytic diesel oil hydroconversion catalyst

46.86g of phosphoric acid was weighted, added with 450mL of distilled water, sequentially adding 169.71g of molybdenum oxide and 63.78g of basic nickel carbonate, the materials were heated and stirred until the materials were completely dissolved, and distilled water was used to fix the volume of the solution to 500mL to obtain a solution L-1. The carrier A1 was subjected to the saturated impregnation with the solution L-1, dried at 110°C for 2h and roasted at 450°C for 5h to prepare a catalyst C-A1, its properties were shown in Table 2.

The SEM line scanning schematic diagram of the spherical carrier A1 and the SiO₂ distribution diagram were shown in FIG. 1 and FIG. 2, respectively. As illustrated by FIG. 2, the SiO₂ distribution diagram showed the normal distribution, which demonstrated that the obtained spherical carrier A1 had a core-shell structure. When the diameter of the spherical particle was within the range of 0-0.2mm, the change amplitude of the SiO₂ signal intensity was small, the intensity then started to increase gradually and reached a maximum value near the particle diameter of 0.5mm, subsequently the signal intensity was gradually decreased, the change of the signal intensity was small after the particle diameter reached the range of 0.8-1.03mm, the peak width of the SiO₂ signal peak was 0.6 mm. The shell layer thickness of the spherical carrier A1 was 0.43mm, which accounted for 41.7% of the carrier diameter.

### Example 2

The spherical carrier and the catalyst were prepared according to the same conditions as those in Example 1, except that polyacrylamide was replaced with 2.5g of polyethyleneimine (with a weight average molecular weight of 70,000, Macklin), hexamethylenetetramine solution with the mass concentration of 40wt% was replaced with 8.5g of urea solution with a concentration of 50wt%, the dispersant sodium lauryl sulfate was replaced with 5g of trioctyl phosphate (Macklin, the content is 99%), the molded gel beads were subjected to aging at the temperature of 100°C for 4h, instead of that the molded gel beads were subjected to aging at the temperature of 95°C for 1.5h, the spherical carrier A2 was obtained, the properties were shown in Table 1. The carrier A2 was subjected to the saturated impregnation with the solution L-1, dried at 110°C for 2h, and roasted at 500°C for 4h to prepare a catalyst C-A2, its properties were shown in Table 2.

### Example 3

The spherical carrier and the catalyst were prepared according to the same conditions as those in Example 1, except that the original molecular sieve was replaced by a Y-type molecular sieve with a pore volume of 0.36 mL/g, a specific surface area of 743 m²/g, a relative crystallinity of 97%, a SiO₂/Al₂O₃ molar ratio of 15, a unit cell parameter of 2.442nm and the infrared total acid amount of 0.9 mmol/g, which was ground by a ball mill to a powder having a particle diameter less than or equal to 2.0 µm; the primary emulsion was changed to 83.7g of span 20 (commercially available from Xingtai Xinlanxing technologies, Co.. Ltd.) having a concentration of 3.0wt% and a hydrophilic-lipophilic balance value (HLB) of 8.6, the solid content of the water-in-oil (W/O) emulsion was adjusted to 12.1 wt%, the spherical carrier A3 was obtained, the properties were shown in Table 1. The carrier A3 was subjected to the saturated impregnation with the solution L-1, dried at 130°C for 2h and roasted at 480°C for 3h to prepare a catalyst C-A3, its properties were shown in Table 2.

### Example 4

### (1) Preparation of the spherical Carrier

The Y-type molecular sieve with a pore volume of 0.36 mL/g, a specific surface area of 743 m²/g, a relative crystallinity of 97%, a SiO₂/Al₂O₃ molar ratio of 15, a unit cell parameter of 2.442nm and the infrared total acid amount of 0.9 mmol/g was ground by a ball mill to a powder having a particle diameter less than or equal to 2.0 µm;

200g of aluminum sol with 30% by mass of Al₂O₃ was added with 12g of hexamethylenetetramine solution with a mass concentration of 50wt% and 24g of carboxymethyl cellulose solution with a mass concentration of 20wt%, the materials were stirred to obtain a uniformly mixed solution.

40g of ground Y-type molecular sieve powder was weighted and added into the mixed solution, and a dispersion system solution containing molecular sieve and having a solid content of 36.23wt% was formed under the action of ultrasonic waves with a frequency of 100KHz;

The dispersion system solution containing molecular sieve was added into 498.6g of white oil with a kinematic viscosity at 40°C of 35 mm²/s, and stirred at the rotational speed of 1,000 r/min to obtain a water-in-oil primary emulsion;

The primary emulsion was added with 60g of span 40 (commercially available from Guangdong Huana Chemistry Co., Ltd.) having a concentration of 5wt% and a hydrophilic-lipophilic balance value (HLB) of 6.7, and 3.2g of polyacrylamide (same as in Example 1), and the stirring rotational speed was adjusted to 5,000 rpm, a water-in-oil (W/O) emulsion having a solid content of 11.9 wt% was obtained.

The obtained emulsion was dropwise added into the water for moulding at the temperature of 95°C by using a syringe, the molded gel beads were subjected to aging at the temperature of 95°C for 2h, and after the aging process was complete, the gel beads were extracted in a Soxhlet fat extractor at the temperature of 100°C for 3h by using a mixed solution consisting of petroleum ether and absolute ethanol in a volume ratio of 1: 1, then washed with deionized water at the temperature of 70°C to be neutral, the gel beads were dried at the temperature of 120°C for 8 hours, then roasted at the temperature of 550°C for 3 hours to obtain the spherical carrier A4, its properties were shown in Table 1.

### (2) Preparation of the spherical catalytic diesel oil hydroconversion catalyst

32.49g of phosphoric acid was weighted, added with 400mL of distilled water, sequentially adding 117.21g of molybdenum oxide and 42.97g of basic nickel carbonate, the materials were heated and stirred until the materials were completely dissolved, distilled water was used to fix the volume of the solution to 500mL to obtain a solution L-2. The carrier A4 was subjected to the saturated impregnation with the solution L-1, dried at 110°C for 2h, and roasted at 500°C for 3h to prepare a catalyst C-A4, its properties were shown in Table 2.

### Example 5

The spherical carrier and the catalyst were prepared according to the same conditions as those in Example 4, except that 3.2g of polyacrylamide was replaced with 4g of polyethyleneimine (the same as Example 2), 60.0g of octylphenol polyoxyethylene ether (OP-4, same as Example 1) having a concentration of 6.0wt% and a hydrophilic-lipophilic balance value (HLB) of 8.0 was added into the primary emulsion, the molded gel beads were subjected to aging at the temperature of 100°C for 2h, instead of that the molded gel beads were subjected to aging at the temperature of 98°C for 2.0h, the spherical carrier A5 was obtained, the properties were shown in Table 1. The carrier A5 was subjected to the saturated impregnation with the solution L-2, dried at 130°C for 2h, and roasted at 530°C for 3h to prepare a catalyst C-A5, its properties were shown in Table 2.

### Comparative Example 1

### (1) Preparation of the spherical carrier

The Y-type molecular sieve with a pore volume of 0.43 mL/g, a specific surface area of 814 m²/g, a relative crystallinity of 98%, a SiO₂/Al₂O₃ molar ratio of 12, a unit cell parameter of 2.446nm and the infrared total acid amount of 0.8 mmol/g was ground by a ball mill to a powder having a particle diameter less than or equal to 1.5 µm;

185g of aluminum sol with 27% by mass of Al₂O₃ was added with 9.5g of hexamethylenetetramine solution with the mass concentration of 40wt%, the materials were stirred to obtain a uniform mixed solution.

50g of ground Y-type molecular sieve powder was weighted and added into the mixed solution, and a dispersion system solution containing molecular sieve and having a solid content of 40.87wt% was formed under the action of ultrasonic waves with a frequency of 100KHz;

The dispersion system solution containing a molecular sieve was added into 476.1g of white oil with a kinematic viscosity at 40°C of 28 mm²/s, and stirred at the rotational speed of 800 r/min to obtain a water-in-oil primary emulsion;

The primary emulsion was added with 55.8g of octyl phenol polyoxyethylene ether (OP-4, same as that in Example 1) having a concentration of 4.5wt% and a hydrophilic-lipophilic balance value (HLB) of 8.0, and 2.0g of polyacrylamide (same as that in Example 1), and the stirring rotational speed was adjusted to 3,500 rpm, a water-in-oil (W/O) emulsion having a solid content of 12.84 wt% was obtained.

The obtained emulsion was dropwise added into the water for moulding at the temperature of 95°C by using a syringe, the molded gel beads were subjected to aging at the temperature of 95°C for 1.5h, and after the aging process was complete, the gel beads were extracted in a Soxhlet fat extractor at the temperature of 100°C for 2.5h by using a mixed solution consisting of petroleum ether and absolute ethanol in a volume ratio of 1: 1, then washed with deionized water at the temperature of 70°C to be neutral, then dried at the temperature of 120°C for 8 hours, then roasted at the temperature of 500°C for 3 hours to obtain the spherical carrier F1, its properties were shown in Table 1. The SiO₂ distribution diagram of the spherical carrier F1 was shown in FIG. 2. As can be seen from FIG. 2, the SiO₂ distribution diagram illustrated a scattered distribution, it demonstrated that the spherical carrier F1 obtained in Comparative Example 1 did not have a core-shell structure.

### (2) Preparation of the spherical catalytic diesel oil hydroconversion catalyst

The carrier F1 was subjected to the saturated impregnation with the solution L-1, dried at 110°C for 2h and roasted at 450°C for 5h to prepare a catalyst C-F1, its properties were shown in Table 2.

### Comparative Example 2

### (1) Preparation of the spherical carrier

The Y-type molecular sieve with a pore volume of 0.43 mL/g, a specific surface area of 814 m²/g, a relative crystallinity of 98%, a SiO₂/Al₂O₃ molar ratio of 12, a unit cell parameter of 2.446nm and an infrared total acid amount of 0.8 mmol/g was ground by a ball mill to a powder having a particle diameter less than or equal to 1.5 µm;

185g of aluminum sol with 27% by mass of Al₂O₃ was added with 9.5g of hexamethylenetetramine solution with a mass concentration of 40wt% and 20g of sodium dodecyl sulfate solution with a mass concentration of 25wt%, the materials were stirred to obtain a uniform mixed solution.

50g of ground Y-type molecular sieve powder was weighted and added into the mixed solution, and a dispersion system solution containing molecular sieve and having a solid content of 37.78wt% was formed under the action of ultrasonic waves with a frequency of 100KHz;

The dispersion system solution containing a molecular sieve was added into 476.1g of white oil with a kinematic viscosity at 40°C of 28 mm²/s, and stirred at the rotational speed of 800 r/min to obtain a water-in-oil primary emulsion;

The primary emulsion was added with 55.8g of octyl phenol polyoxyethylene ether (OP-4, same as that in Example 1) having a concentration of 4.5wt% and a hydrophilic-lipophilic balance value (HLB) of 8.0, and the stirring rotational speed was adjusted to 3,500 rpm, a water-in-oil (W/O) emulsion having a solid content of 12.9 wt% was obtained.

The obtained emulsion was dropwise added into the water for moulding at the temperature of 95°C by using a syringe, the molded gel beads were subjected to aging at the temperature of 95°C for 1.5h, and after the aging process was complete, the gel beads were extracted in a Soxhlet fat extractor at the temperature of 100°C for 2.5h by using a mixed solution consisting of petroleum ether and absolute ethanol in a volume ratio of 1: 1, then washed with deionized water at the temperature of 70°C to be neutral, then dried at the temperature of 120°C for 8 hours, then roasted at the temperature of 500°C for 3 hours to obtain the spherical carrier F2, its properties were shown in Table 1. The SiO₂ distribution diagram of the spherical carrier F1 was shown in FIG. 2. As can be seen from FIG. 2, the SiO₂ distribution diagram illustrated a scattered distribution, it demonstrated that the spherical carrier F2 obtained in Comparative Example 2 did not have a core-shell structure.

### (2) Preparation of the spherical catalytic diesel oil hydroconversion catalyst

The carrier F2 was subjected to the saturated impregnation with the solution L-1, dried at 110°C for 2h, and roasted at 450°C for 5h to prepare a catalyst C-F2, its properties were shown in Table 2.

**Table 1 Carrier properties**

| Numbers | A1 | A2 | A3 | A4 | A5 | F1 | F2 |
|---|---|---|---|---|---|---|---|
| Content of aluminum oxide, % | 49.9 | 49.9 | 49.9 | 60.6 | 60.6 | 49.9 | 49.9 |
| Content of molecular sieve, % | 50.1 | 50.1 | 50.1 | 39.4 | 39.4 | 50.1 | 50.1 |
| Specific surface area, m²/g | 465 | 459 | 428 | 394 | 386 | 421 | 406 |
| Pore volume, mL/g | 0.63 | 0.63 | 0.60 | 0.58 | 0.59 | 0.60 | 0.57 |
| Infrared total acid amount, mmol/g | 0.65 | 0.64 | 0.66 | 0.57 | 0.56 | 0.58 | 0.52 |
| B/L ratio | 1.12 | 1.10 | 1.15 | 1.03 | 1.05 | 0.97 | 0.84 |
| Particle diameter, mm | 1.03 | 1.02 | 0.80 | 1.86 | 1.51 | 1.01 | 1.02 |
| Wear index, % | 0.02 | 0.02 | 0.01 | 0.02 | 0.02 | 0.08 | 0.15 |
| Edgewise compressive strength, /mm | 33 | 32 | 35 | 29 | 27 | 24 | 16 |
| The proportion of the carrier shell layer thickness to the carrier diameter, % | 41.7 | 38.1 | 38.4 | 56.3 | 57.2 | - | - |
| Pore size distribution, % | | | | | | | |
| <4nm | 3.1 | 3.8 | 2.7 | 1.9 | 2.1 | 6.9 | 10.4 |
| 4-10nm | 78.6 | 78.3 | 76.7 | 72.7 | 73.6 | 76.3 | 74.3 |
| >10nm | 18.3 | 17.9 | 20.6 | 25.4 | 24.3 | 16.8 | 15.3 |
| Bulk ratio, g/mL | 0.75 | 0.74 | 0.78 | 0.66 | 0.70 | 0.74 | 0.75 |

| | | | | | | | |
|---|---|---|---|---|---|---|---|
| Note: in Table 1, the contents of the aluminum oxide and the molecular sieve refer to the contents of percentage by mass; the pore size distribution refers to the ratio of pore volume of pores with various pore diameters relative to the total pore volume. | | | | | | | |

**Table 2 Catalyst properties**

| Numbers | C-A1 | C-A2 | C-A3 | C-A4 | C-A5 | C-F1 | C-F2 |
|---|---|---|---|---|---|---|---|
| Specific surface area, m²/g | 378 | 367 | 351 | 331 | 326 | 335 | 301 |
| Pore volume, mL/g | 0.39 | 0.39 | 0.35 | 0.40 | 0.40 | 0.34 | 0.31 |
| Infrared total acid amount, mmol/g | 0.58 | 0.55 | 0.60 | 0.50 | 0.48 | 0.43 | 0.39 |
| B/L ratio | 0.86 | 0.80 | 0.82 | 0.76 | 0.75 | 0.66 | 0.54 |
| Particle diameter, mm | 1.03 | 1.02 | 0.80 | 1.86 | 1.51 | 1.01 | 1.02 |
| Wear index, % | 0.02 | 0.02 | 0.01 | 0.02 | 0.02 | 0.07 | 0.13 |
| MoO₃, wt% | 19.84 | 19.89 | 19.78 | 14.89 | 14.91 | 19.86 | 19.83 |
| NiO, wt% | 3.98 | 4.05 | 3.89 | 2.91 | 2.89 | 2.94 | 2.89 |
| P, wt% | 1.41 | 1.40 | 1.39 | 1.08 | 1.10 | 1.09 | 1.12 |
| Distribution coefficient φ, % | 0.75 | 0.72 | 0.78 | 0.64 | 0.66 | - | - |

As can be seen from the data in the Tables and Figures, the carriers provided by the present invention form a core-shell structure of the aluminum oxide-molecular sieve and had the characteristics of large specific surface area and pore volume, low wear index, and large edgewise compressive strength.

### Test Example 1

The catalytic diesel oil hydrogenation catalysts prepared in the Examples and Comparative Examples were loaded onto the CSTR apparatus, and then vulcanization of catalysts was carried out at the reaction temperatures of 280°C (6 hours) and 320°C (6 hours) respectively by using aviation kerosene containing 1.5 wt% of CS₂ (commercially available from Tianjin Damao Chemical Reagent Factory) as a sulfiding agent, after completion of the vulcanization process, the feedstock oil was switched at an elevated temperature to evaluate activity of catalysts, and properties of the feedstock oil in use were shown in Table 3, and evaluation conditions (reaction for 500 hours) and evaluation results were shown in Table 4.

**Table 3 Properties of the feedstock oil**

| Items | Feedstock oil |
|---|---|
| Density (20°C), kg/m³ | 0.946 |
| S, wt% | 0.55 |
| N, µg/g | 1305 |
| Total aromatic hydrocarbons, wt% | 76.4 |
| Yield at the temperature lower than 210°C, wt% | 4.9 |

### Test Comparative Example

The industrial agent hydrofining catalyst (FF-66) and hydroconversion catalyst (FC-24) were mixed at 1:1 by volume and separately loaded onto a CSTR(Continuous Stirred Tank Reactor) apparatus for performing vulcanization and evaluation as described in Test Example 1, the results were shown in Table 4.

**Table 4 Evaluation process conditions and evaluation results**

| Numbers | C-A1 | C-A2 | C-A3 | C-A4 | C-A5 | C-F1 | C-F2 | Industrial agent |
|---|---|---|---|---|---|---|---|---|
| Reaction temperature, °C | 425 | 425 | 425 | 425 | 425 | 425 | 425 | 425 |
| Reaction pressure, MPa | 10 | 10 | 10 | 10 | 10 | 10 | 10 | 10 |
| Hourly space velocity, h⁻¹ | 0.4 | 0.4 | 0.4 | 0.4 | 0.4 | 0.4 | 0.4 | 0.4 |
| Hydrogen gas/oil volume ratio | 600: 1 | 600: 1 | 600: 1 | 600: 1 | 600: 1 | 600: 1 | 600: 1 | 600:1 |
| S, µg·g⁻¹ | 1.0 | 2.4 | 1.0 | 5.89 | 6.57 | 413 | 573 | 439 |
| N, µg.g⁻¹ | 6.86 | 7.64 | 5.34 | 11.31 | 14.38 | 29.65 | 38.98 | 33.6 |
| Total aromatic hydrocarbons, wt% | 72.3 | 72.6 | 71.8 | 72.9 | 73.0 | 74.3 | 74.8 | 74.7 |
| Yield at the temperature lower than 210°C, wt% | 56.4 | 54.3 | 56.9 | 50.1 | 48.4 | 34.8 | 25.1 | 31.8 |
| Content of C6-C9 light aromatic hydrocarbons, % | 26.34 | 25.41 | 27.12 | 22.10 | 20.95 | 13.20 | 10.10 | 12.31 |

As can be seen from the data in the Table, compared with the catalyst in the Comparative Example, the catalytic diesel hydrogenation catalyst prepared by the present invention has a higher impurity removal rate, higher yield lower than 210°C and content of C6-C9 light aromatic hydrocarbons, and can be used as a gasoline blending component or used for producing BTX after being cut. In addition, the present invention can realize reasonable matching of hydrogenation and cracking on a single catalyst according to the comparison with an industrial agent.

### Test Example 2

The Test Example was used to prove stability of the catalyst provided by the present invention. The catalyst C-A1 prepared in Example 1 and the industrial agent were vulcanized and evaluated as described in Test Example 1, and the evaluation results after 2,000 hours of operation were shown in Table 5.

**Table 5 Evaluation process conditions and evaluation results**

| Numbers | C-A1 | Industrial agent |
|---|---|---|
| Reaction temperature, °C | 425 | 425 |
| Reaction pressure, MPa | 10 | 10 |
| Hourly space velocity, h⁻¹ | 0.4 | 0.4 |
| Hydrogen gas/oil volume ratio | 600: 1 | 600:1 |
| S, µg·g⁻¹ | 2.5 | 521 |
| N, µg.g⁻¹ | 9.75 | 70.30 |
| Total aromatic hydrocarbons, wt% | 73.1 | 75.7 |
| Yield at the temperature lower than 210°C, wt% | 50.1 | 21.1 |
| Content of C6-C9 light aromatic hydrocarbons, % | 23.15 | 8.9 |

As can be seen from the data in Table 5, the catalyst provided by the present invention exhibited desirable stability.

## Claims

1. A hydrogenation catalyst carrier, which is spherical and has a core-shell structure, wherein the carrier uses a molecular sieve as a core layer and aluminum oxide as a shell layer; based on the weight of the carrier, the content of aluminum oxide is 30%-70%, preferably 30%-65%, and the content of the molecular sieve is 30%-70%, preferably 35%-70%; and the diameter of carrier particles is within the range of 0.5-3mm, preferably within the range of 0.8-2mm.

2. The carrier according to claim 1, wherein the thickness of the carrier shell layer is 30-60%, preferably 30-55% of the carrier diameter.

3. The carrier according to claim 1, wherein the carrier has a total acid number within the range of 0.4-0.7 mmol/g, preferably within the range of 0.45-0.7 mmol/g;
preferably, the ratio of B acid to L acid of the carrier is within the range of 0.9-1.4, preferably within the range of 0.9-1.3.

4. The carrier according to claim 1, wherein the carrier has a specific surface area within the range of 350-550 m²/g, preferably within the range of 380-500 m²/g;
and/or the carrier has a pore volume within the range of 0.4-0.7 mL/g,
preferably within the range of 0.4-0.65 mL/g;
and/or in the carrier, the pore volume of the pores having a diameter less than 4nm pores accounts for 5% or less of the total pore volume, the pore volume of the pores having a diameter within the range of 4-10nm accounts for 65-85% of the total pore volume, and the pore volume of the pores having a diameter larger than 10nm accounts for 10-30% of the total pore volume;
and/or the bulk ratio of the carrier is within the range of 0.5-0.9 g/mL; and/or the wear index of the carrier is less than or equal to 0.05%, preferably less than or equal to 0.03%;
and/or the edgewise compressive strength of the carrier is larger than 18N/mm, preferably larger than 20N/mm.

5. The carrier according to any one of claims 1-4, wherein the molecular sieve is at least one selected from the group consisting of a Y-type molecular sieve, β molecular sieve, ZSM-5 molecular sieve, SAPO molecular sieve, and MCM-41 molecular sieve;
preferably, the molecular sieve is a Y-type molecular sieve;
preferably, the Y-type molecular sieve has the pore volume within the range of 0.35 mL/g - 0.5 mL/g, the specific surface area within the range of 700m²/g - 950m²/g, the infrared total acid amount within the range of 0.6-1 mmol/g, the relative crystallinity within the range of 90%-120%, the SiO₂/Al₂O₃ molar ratio within the range of 10-30, and the unit cell parameter within the range of 2.436-2.450 nm.

6. A preparation method for a hydrogenation catalyst carrier, the method comprising the following steps:
(1) mixing an aluminum source, a curing agent, a dispersant, and a molecular sieve to obtain a material flow B;
(2) blending the material flow B with an oil phase to obtain a material flow C;
(3) mixing the material flow C obtained in step (2) with an emulsifier and an auxiliary agent to obtain a material flow D, and subjecting the material flow D to moulding, aging, washing, drying and roasting.

7. The method according to claim 6, wherein step (1) comprises:
(1-1) mixing an aluminum source, a curing agent, and a dispersant to obtain a material flow A;
(1-2) adding molecular sieve to the material flow A for dispersion to obtain the material flow B;
preferably, the dispersion in the step (1-2) is carried out under ultrasonic conditions, the ultrasonic frequency is preferably within the range from 25KHz to 130 KHz.

8. The method according to claim 6 or 7, wherein the material flow B has a solid content from 35wt% to 55wt%, preferably from 35wt% to 50 wt%;
preferably, the aluminum source is selected from aluminum sol and/or acidified pseudo-boehmite, more preferably aluminum sol;
preferably, the mass content of Al₂O₃ in the aluminum sol is within the range of 20-45%, more preferably within the range of 25-40%.

9. The method according to any one of claims 6-8, wherein the curing agent is hexamethylenetetramine and/or urea, preferably hexamethylenetetramine;
preferably, the mass concentration of the curing agent is within the range of 30-70%;
preferably, the addition amount of the curing agent is 1-15%, more preferably 2.5-12% of the mass of the aluminum source calculated in terms of aluminum oxide.

10. The method according to any one of claims 6-9, wherein the dispersant is at least one selected from the group consisting of sodium lauryl sulfate, methyl amyl alcohol, trioctyl phosphate, cellulose derivatives, guar gum, and fatty acid polyglycol ester;
preferably, the cellulose derivatives is at least one selected from the group consisting of cellulose ether, cellulose ester, and cellulose ether ester; more preferably, the cellulose derivative is at least one selected from the group consisting of methylcellulose, ethylcellulose, carboxymethylcellulose, carboxyethylcellulose, hydroxymethylcellulose, hydroxyethylcellulose, cellulose nitrate, cellulose acetate, cellulose acetate butyrate, and cellulose xanthate;
preferably, the mass concentration of the dispersant is within the range of 20-40%;
preferably, the addition amount of the dispersant is 5-15% of the mass of the aluminum source calculated in terms of aluminum oxide.

11. The method according to any one of claims 6-10, wherein the molecular sieve is at least one selected from the group consisting of a Y-type molecular sieve, β molecular sieve, ZSM-5 molecular sieve, SAPO molecular sieve, and MCM-41 molecular sieve;
preferably, the molecular sieve is a Y-type molecular sieve;
preferably, the Y-type molecular sieve has the pore volume within the range of 0.35 mL/g - 0.5 mL/g, the specific surface area within the range of 700 m²/g - 950 m²/g, the infrared total acid amount within the range of 0.6-1 mmol/g, the relative crystallinity within the range of 90% -120%, the SiO₂/Al₂O₃ molar ratio within the range of 10-30, and the unit cell parameter within the range of 2.436-2.450 nm;
preferably, the particle diameter of the molecular sieve is within the range of 1-10mm, more preferably within the range of 1.5-8mm;
preferably, the addition amount of the molecular sieve is 0.6-2 times the mass of the aluminum source calculated in terms of aluminum oxide.

12. The method according to any one of claims 6-11, wherein the oil phase in step (2) has a kinematic viscosity at 40°C within the range of 20-40 mm²/s, preferably within the range of 25-35 mm²/s;
preferably, the oil phase is at least one selected from the group consisting of white oil, diesel oil, kerosene, lubricating oil, and C10-C15 alkane compounds, more preferably white oil and/or diesel oil;
preferably, the addition amount of the oil phase is 1-2.5 times, more preferably 1.2-2.5 times the mass of the material flow B.

13. The method according to any one of claims 6-12, wherein the emulsifier of step (3) is a non-ionic emulsifier;
preferably, the emulsifier has a hydrophilic-lipophilic balance value within the range of 3-10, more preferably within the range of 4-9;
preferably, the emulsifier is at least one selected from the group consisting of octyl phenol polyoxyethylene ether, span 20 and span 40;
preferably, the addition amount of the emulsifier is 3wt% - 8wt%, more preferably 4wt% - 7wt% of the mass of the aluminum source calculated in terms of aluminum oxide.

14. The method according to any one of claims 6-13, wherein the auxiliary agent is a nucleating agent and/or a coagulant;
preferably, the auxiliary agent is at least one selected from the group consisting of starch, protein, animal glue, sodium alginate, sodium carboxymethylcellulose, polyacrylamide, sodium polyacrylate, polyvinyl pyridinium and polyethyleneimine, further preferably polyacrylamide;
preferably, the addition amount of the auxiliary agent is 2wt% - 10wt%, more preferably 3wt% - 10wt% of the addition amount of the molecular sieve.

15. The method according to any one of claims 6-14, wherein the material flow D has a solid content within the range of 10wt% - 20wt%;
preferably, material flow D in step (3) is a water-in-oil emulsion;
preferably, the moulding process in step (3) comprises: dropwise adding the material flow D into the water for moulding;
preferably, the moulding temperature of the moulding process is within the range of 85°C - 98°C, more preferably 93°C - 97°C;
preferably, the aging conditions comprise the aging temperature within the range of 30-100°C, more preferably 80-100°C, and the aging time within the range of 1-48h, more preferably 2-10h.

16. The method according to any one of claims 6-15, wherein the method further comprises performing an extraction prior to the washing operation;
preferably, the solvent used for extraction is at least one selected from the group consisting of petroleum ether, cyclohexane, toluene, and absolute ethanol, more preferably a mixed solvent of at least one selected from petroleum ether, cyclohexane, and toluene with absolute ethanol, further preferably, the volume content of absolute ethanol in the mixed solvent is within the range of 25-50%;
preferably, the extraction conditions comprise the extraction temperature within the range of 90°C-110°C and the extraction time within the range of 2-4h;
preferably, the drying temperature in step (3) is within the range of 100°C-150°C, and the drying time within the range of 6-10h;
preferably, the roasting temperature in step (3) is within the range of 450°C-750°C, and the roasting time is within the range of 1-4h.

17. A hydrogenation catalyst comprising a carrier and active metal components, wherein the carrier uses a molecular sieve as a core layer and aluminum oxide as a shell layer; based on the weight of the carrier, the content of aluminum oxide is 30%-70%, preferably 30%-65%, and the content of the molecular sieve is 30%-70%, preferably 35%-70%; and the diameter of carrier particles is within the range of 0.5-3mm, preferably within the range of 0.8-2mm;
preferably, the active metal components comprise at least one of the group VIII metals and at least one of the group VIB metals.

18. The catalyst according to claim 17, wherein the thickness of the carrier shell layer is 30-60%, preferably 30-55% of the carrier diameter;
preferably, the molecular sieve is at least one selected from the group consisting of a Y-type molecular sieve, β molecular sieve, ZSM-5 molecular sieve, SAPO molecular sieve, and MCM-41 molecular sieve;
preferably, the molecular sieve is a Y-type molecular sieve;
preferably, the Y-type molecular sieve has the pore volume within the range of 0.35 mL/g - 0.5 mL/g, the specific surface area within the range of 700 m²/g - 950 m²/g, the infrared total acid number within the range of 0.6-1 mmol/g, the relative crystallinity within the range of 90% -120%, the SiO₂/Al₂O₃ molar ratio within the range of 10-30, and the unit cell parameter within the range of 2.436-2.450 nm.

19. The catalyst according to claim 17 or 18, wherein the content of the carrier is 61wt%-90wt%, preferably 69wt%-90wt%; the content of the VIII group metal calculated in terms of oxide is 1wt%-9wt%, preferably 1wt%-6wt%; the content of the VIB group metal calculated in terms of oxide is 9wt%-30wt%, preferably 9wt%-25wt%, based on the weight of the catalyst;
preferably, the distribution coefficient φ of the active metal component in the core layer and the shell layer of the carrier is 0.6-0.95: 1;
preferably, the group VIII metal is Ni and/or Co, and the group VIB metal is W and/or Mo.

20. The catalyst according to any one of claims 17-19, wherein the catalyst has a total acid number within the range of 0.35-0.65 mmol/g, preferably within the range of 0.4-0.65 mmol/g;
preferably, the catalyst has the ratio of B acid to L acid within the range of 0.6-1.1, more preferably within the range of 0.65-1;
preferably, the catalyst has a specific surface area within the range of 250-450 m²/g, more preferably within the range of 300-450 m²/g;
preferably, the catalyst has a pore volume within the range of 0.3-0.5 mL/g, more preferably within the range of 0.35-0.5 mL/g;
preferably, the carrier has a wear index less than or equal to 0.05%, more preferably less than or equal to 0.03%;
preferably, the carrier has an edgewise compressive strength larger than 20 N/mm.

21. A preparation method for the hydrogenation catalyst, the method comprising the following steps:
S1: preparing a carrier using the preparation method according to any one of claims 6-16;
S2: introducing active metal components to the carrier to obtain a hydrogenation catalyst;
the active metal components comprise at least one of the group VIII metals and at least one of the group VIB metals;
preferably, the group VIII metal is Ni and/or Co, the group VIB metal is W and/or Mo;
preferably, the carrier and active metal components are used in an amount such that the content of the carrier in the prepared catalyst is 61wt%-90wt%, more preferably 69wt%-90wt%; the content of the VIII group metal calculated in terms of oxide is 1wt%-9wt%, more preferably 1wt%-6wt%; the content of the VIB group metal calculated in terms of oxide is 9wt%-30wt%, more preferably 9wt%-25wt%, based on the weight of the catalyst.

22. The preparation method according to claim 21, wherein step S2 comprises impregnating the carrier with an impregnation liquid of a precursor containing an active metal component, then drying and roasting for the obtained solid product;
preferably, the drying conditions comprise the drying temperature within the range of 100°C-150°C and the drying time within the range of 2-24h;
preferably, the roasting conditions comprise the roasting temperature within the range of 400°C - 600°C and the roasting time within the range of 2-8h.

23. Use of a hydrogenation catalyst according to any one of claims 17-20 or the hydrogenation catalyst produced with the preparation method according to claim 21 or 22 in the hydroconversion process of a hydrocarbonaceous material;
preferably, the hydrocarbonaceous material is catalytic diesel;
preferably, the hydroconversion process is carried out in a fluidized bed reactor.

24. A catalytic diesel oil hydroconversion method using a fluidized bed, the method comprising: carrying out the reaction of a catalytic diesel with hydrogen gas in a fluidized bed hydrogenation reactor in the presence of a catalyst under the catalytic diesel oil hydroconversion conditions, wherein the catalyst is the hydrogenation catalyst according to any one of claims 17-20, or the hydrogenation catalyst produced with the preparation method according to claim 21 or 22;
preferably, the properties of the catalytic diesel comprise a density within the range of 0.88-0.99 g/cm³, the content of aromatic hydrocarbons within the range of 50wt%-90wt%, the sulfur content within the range of 0.2wt%-2wt%, and the nitrogen content within the range of 500-2,000 µg/g;
preferably, the catalytic diesel oil hydroconversion conditions comprise the reaction pressure within the range of 5-10MPa, the reaction temperature within the range of 360-430°C, the liquid hourly space velocity within the range of 0.3-3h⁻¹, and the hydrogen gas/oil volume ratio within the range of 100-1,000.
